# EUROPEAN PATENT SPECIFICATION

(11) **EP 4 393 606 B1**
(45) Date of publication and mention of the grant of the patent: **08.07.2026**
(21) Application number: 23769738.8
(22) Date of filing: 14.03.2023
(51) Int. Cl.: B05C 5/02, H01M 4/04, B05C 11/10

(54) **COATING DIE AND BATTERY ELECTRODE PLATE COATING APPARATUS**
BESCHICHTUNGSDÜSE UND BATTERIEELEKTRODENBESCHICHTUNGSVORRICHTUNG
MATRICE DE REVÊTEMENT ET DISPOSITIF DE REVÊTEMENT D'ÉLECTRODE DE BATTERIE

(30) Priority: 14.03.2022 CN 202220553899 U
(43) Date of publication of application: 03.07.2024
(73) Proprietor: Contemporary Amperex Technology (Hong Kong) Limited, Central, Central And Western District (HK)
(72) Inventor: YANG, Guozhong, Ningde, Fujian 352100 (CN); SUN, Xiangli, Ningde, Fujian 352100 (CN); LI, Fengdan, Ningde, Fujian 352100 (CN); LIU, Longyun, Ningde, Fujian 352100 (CN); WU, Xiaoping, Ningde, Fujian 352100 (CN); YANG, Chao, Ningde, Fujian 352100 (CN)
(74) Representative: Gong, Jinping
(86) International application number: PCT/CN2023/081229
(87) International publication number: WO 2023/174236

(56) References cited:
- WO-A1-2012/157434
- WO-A1-2014/117823
- WO-A1-2014/117823
- CN-A- 103 596 700
- CN-A- 103 883 752
- CN-U- 203 862 492
- CN-U- 203 862 492
- CN-U- 212 441 861
- CN-U- 217 140 967
- CN-U- 217 140 968
- JP-A- H11 226 469
- US-A- 5 243 841

## Description

### CROSS-REFERENCE TO RELATED APPLICATIONS

This application claims priority to Chinese Patent Application No. 202220553899.X, filed on March 14, 2022 and entitled "COATING DIE AND BATTERY ELECTRODE PLATE COATING APPARATUS".

### TECHNICAL FIELD

This application relates to the field of coating technologies, and in particular, to a coating die and a battery electrode plate coating apparatus.

### BACKGROUND

Coating is an essential process during production of batteries and a key process directly affecting various performance aspects of batteries, such as safety, capacity, and service life. Coating is to apply a prepared paste-like viscous slurry on a substrate (aluminum foil or copper foil) evenly and continuously or intermittently.

During a coating process, how thickness consistency of all coating positions is ensured has always been a research direction in the industry.

WO 2012/157434 A1 describes a device for coating a liquid material on a surface of a coating target in the manufacture of electric and electronic products, comprising a nozzle which includes branching blocks having a branched channel structure and a tip member having an ejection port. A plurality of tubules is affixed to the tip member, wherein inflow openings of the tubules communicate with the branched channel structure and tubule outflow openings communicate with the ejection port of the tip member. The branching blocks include multiple stages of branching portions each of which provides a chamber to branch a flow channel communicating with an inflow opening.

CN 212 441 861 U describes a coating die with a slurry channel, from which slurry for coating a battery pole piece can be extruded. The slurry channel is provided with a series of regulating components arranged along its length, which each have an end extending into the slurry channel that is shaped in a manner that its profile, as seen in the direction of slurry flow, changes when the component is rotated.

### SUMMARY

This application provides a coating die and a battery electrode plate coating apparatus, which can improve the consistency of the coating thickness.

According to a first aspect, the application provides a coating die configured to apply a slurry on a substrate according to claim 1. The coating die includes a die body and a rectifying mechanism. The die body is provided with a discharging outlet. The rectifying mechanism is provided with a feeding inlet and a branching channel, where the feeding inlet is configured for injecting the slurry, the branching channel communicates with the feeding inlet and is provided with multiple branching openings, and the rectifying mechanism is exposed to the outside of the die body and is detachably connected to the die body, so that the multiple branching openings communicate with the discharging outlet.

In the foregoing technical solutions, after the slurry enters the branching channel through the feeding inlet, the multiple branching openings can branch the slurry to reduce a pressure difference of the slurry flowing from the branching openings, improve pressure uniformity of the slurry, and improve the consistency of the coating thickness. The coating die may be provided with multiple rectifying mechanisms, and the multiple rectifying mechanisms may be provided with branching channels having different specifications. When the coating requirement changes, the rectifying mechanism can be replaced directly, without adjusting other structures of the coating die, which can improve the adaptability of the coating die. When the rectifying mechanism is being replaced, the rectifying mechanism can be detached from and mounted on the die body externally, so as to improve replacement efficiency and coating efficiency of the rectifying mechanism.

The die body is provided with a mounting hole, and the rectifying mechanism is at least partially accommodated in the mounting hole and connected to the die body.

In the foregoing technical solution, the mounting hole can position the rectifying mechanism during mounting of the rectifying mechanism, so as to improve replacement efficiency of the rectifying mechanism. The mounting hole can further accommodate at least a portion of the rectifying mechanism, so as to reduce the volume of the coating die and save space.

The die body is provided with a support wall, and the support wall is located at the bottom of the mounting hole and used for supporting the rectifying mechanism. The support wall is provided with multiple first through holes, and each of the branching openings communicates with the discharging outlet through at least two of the first through holes.

In the foregoing technical solutions, the support wall can support the rectifying mechanism, so as to limit the rectifying mechanism when the rectifying mechanism is inserted into the mounting hole, reducing the risk of the rectifying mechanism being excessively inserted into the die body and improving mounting and detachment efficiency of the rectifying mechanism. The multiple first through holes can branch the slurry, so as to improve pressure uniformity of the slurry and improve the consistency of the coating thickness.

The coating die further includes a regulating mechanism configured to block the first through hole. The regulating mechanism is movably connected to the die body to regulate an area of the first through hole blocked by the regulating mechanism.

In the foregoing technical solutions, the regulating mechanism can adjust a flow area of the first through hole by blocking the first through hole, thereby achieving flow control and pressure control of the slurry flowing through the first through hole, improving the consistency of the coating thickness.

In some embodiments, the regulating mechanism includes multiple regulating members, the multiple regulating members being disposed corresponding to the multiple first through holes.

In the foregoing technical solutions, each regulating member can regulate the flow area of the corresponding first through hole. When a deviation is detected in the thickness of the slurry applied at the discharging outlet, the deviation can be fed back such that the regulating member is controlled to regulate the flow and pressure of the slurry, improving the consistency of the coating thickness.

In some embodiments, the die body is provided with a second through hole communicating with the first through hole, and the regulating member extends into the first through hole via the second through hole.

In the foregoing technical solutions, the size of a portion of the regulating member extending into the first through hole is changed to adjust the flow area of the first through hole, thereby achieving flow control and pressure control of the slurry flowing through the first through hole, improving the consistency of the coating thickness.

In some embodiments, the rectifying mechanism includes a first plate and a second plate that are stacked, where the first plate includes multiple first flow channels spaced apart, each first flow channel forming the branching opening on surface of the first plate facing away from the second plate. The second plate is provided with a second flow channel and the feeding inlet, the second flow channel being configured to communicate the feeding inlet with the multiple first flow channels. The branching channel includes the multiple first flow channels and the second flow channel.

In the foregoing technical solutions, after the slurry enters the second flow channel through the feeding inlet, the multiple first flow channels can branch the slurry in the second flow channel to reduce a pressure difference of the slurry flowing from the branching openings, improve pressure uniformity of the slurry, and improve the consistency of the coating thickness. The first plate needs to be provided with only the first flow channel and the second plate needs to be provided with only the second flow channel and the feeding inlet, which can lower forming difficulties of the first plate and the second plate. The first plate and the second plate being stacked can achieve communication between the first flow channel and the second flow channel, so as to simplify a forming process of the rectifying mechanism.

In some embodiments, the first flow channel forms a first opening on surface of the first plate facing the second plate, the first opening being configured to communicate with the second flow channel.

In the foregoing technical solutions, the first flow channel forms a first opening on an end facing the second plate, which can shorten a distance between the second flow channel and the first flow channel, shortening a flowing path of the slurry.

In some embodiments, the first plate is detachably connected to the second plate.

In the foregoing technical solutions, when the coating requirement changes, the first plate of the rectifying mechanism can be replaced, so as to improve the adaptability of the rectifying mechanism.

In some embodiments, the rectifying mechanism further includes a third plate provided between the first plate and the second plate. The third plate is provided with multiple third flow channels spaced apart, each of the third flow channel communicating at least two of the first flow channels with the second flow channel. The branching channel includes the multiple third flow channels.

In the foregoing technical solutions, the third flow channel of the third plate can perform primary branching on the slurry in the second flow channel, and the first flow channel performs secondary branching on the slurry in the third flow channel. The branching channel can perform multi-level branching on the slurry, so as to achieve uniform flow and uniform pressure.

In some embodiments, the rectifying mechanism further includes a fourth plate provided between the third plate and the second plate. The fourth plate is provided with multiple fourth flow channels spaced apart, each of the fourth flow channels communicating at least two of the third flow channels with the second flow channel. The branching channel includes the multiple fourth flow channels.

In the foregoing technical solutions, the fourth flow channel performs primary branching on the slurry in the second flow channel, the third flow channel performs secondary branching on the slurry in the fourth flow channel, and the first flow channel performs third-level branching on the slurry in the third flow channel. The branching channel can perform multi-level branching on the slurry, so as to achieve uniform flow and uniform pressure.

In some embodiments, the multiple branching openings are arranged at equal internals along a first direction.

In the foregoing technical solutions, the multiple branching openings are arranged with equal gaps along the first direction, so that the slurry flowing from the multiple branching openings can evenly flow to the discharging outlet, reducing pressure difference of different regions of the discharging outlet along the first direction and improving the consistency of the coating thickness.

In some embodiments, the die body includes a first die, a second die, and a gasket. The first die and the second die are disposed opposite each other along the second direction, and the gasket is disposed between the first die and the second die to form the discharging outlet between the first die and the second die. The first die is provided with a first converging cavity, where the first converging cavity is recessed on surface of the first die facing the second die, and the first converging cavity is configured to communicate the multiple branching openings with the discharging outlet. The rectifying mechanism is mounted on the second die.

In the foregoing technical solutions, the first converging cavity can converge slurry flowing from multiple branching openings, functioning as buffering and uniforming pressure, so that the slurry evenly flows from the discharging outlet, improving the consistency of the coating thickness.

In some embodiments, the multiple branching openings and the first converging cavity are disposed opposite each other along the second direction.

In this foregoing technical solutions, the slurry flowing from the branching opening may directly flow into the first converging cavity along the second direction, so as to reduce resistance to the slurry during flowing.

According to a second aspect, an embodiment of this application provides a battery electrode plate coating apparatus including the coating die according to any one of the embodiments of the first aspect. The coating apparatus in this embodiment of this application can improve the thickness consistency of electrode plates and improve the coating efficiency.

### BRIEF DESCRIPTION OF DRAWINGS

The following describes features, advantages, and technical effects of the example embodiments of this application with reference to the accompanying drawings.
FIG. 1 is a schematic structural diagram of a coating die according to some embodiments of this application;
FIG. 2 is a schematic cross-sectional view of the coating die shown in FIG. 1;
FIG. 3 is another schematic cross-sectional view of the coating die shown in FIG. 1;
FIG. 4 is a schematic structural diagram of a second die shown in FIG. 1;
FIG. 5 is a schematic cross-sectional view of a rectifying mechanism shown in FIG. 1;
FIG. 6 is a schematic exploded view of a rectifying mechanism according to some embodiments of this application;
FIG. 7 is another schematic exploded view of a rectifying mechanism according to some embodiments of this application;
FIG. 8 is a schematic structural diagram of a coating die according to some embodiments of this application;
FIG. 9 is a schematic structural diagram of a second die shown in FIG. 8;
FIG. 10 is a partial schematic cross-sectional view of the coating die shown in FIG. 8;
FIG. 11 is a schematic structural diagram of a first die shown in FIG. 8; and
FIG. 12 is a schematic structural diagram of a battery electrode plate coating apparatus according to some embodiments of this application.

Reference signs in the specific embodiments are described as follows:
1. die body; 11. discharging outlet; 12. first die; 121. first converging cavity; 122. second converging cavity; 123. turbulent flow channel; 124. blocker; 13. second die; 14. gasket; 15. mounting hole; 16. support wall; 161. first through hole; 17. second through hole;
2. rectifying mechanism; 21. feeding inlet; 22. branching channel; 22a. branching opening; 23. first plate; 231. first flow channel; 231a. first opening; 24. second plate; 241. second flow channel; 25. third plate; 251. third flow channel; 26. fourth plate; 261. fourth flow channel;
3. regulating mechanism; 31. regulating member;
1000. coating die; 2000. feeding device; 2100. slurry tank; 2200. pipe; 2300. suction pump;
X. first direction; Y. second direction; and Z. third direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is merely for describing an associative relationship of associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive). Similarly, "a plurality of groups" means more than two (inclusive) groups.

The term "parallel" in this application not only includes the absolutely parallel case, but also includes the approximately parallel case in the conventional understanding of engineering; likewise, the term "perpendicular" not only includes the absolutely perpendicular case, but also includes the approximately perpendicular case in the conventional understanding of engineering.

Coating is to apply a coating material to form a thin layer on surface of fabric, paper, a metal foil, a board, or the like in a liquid or powder form. Coating is an essential step in a battery cell production process.

A battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting part and a positive electrode tab. The positive electrode current collecting part is coated with the positive electrode active substance layer, and the positive electrode tab is uncoated with the positive electrode active substance layer. With a lithium-ion battery as an example, its positive electrode current collector may be made of aluminum, and its positive electrode active substance layer includes a positive electrode active substance, where the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting part and a negative electrode tab. The negative electrode current collecting part is coated with the negative electrode active substance layer, and the negative electrode tab is uncoated with the negative electrode active substance layer. The negative electrode current collector may be made of copper, and the negative electrode active substance layer includes a negative electrode active substance, where the negative electrode active substance may be carbon, silicon, or the like. The separator may be made of PP (polypropylene, polypropylene), PE (polyethylene, polyethylene), or the like.

During the battery cell production process, both the positive electrode plate and the negative electrode plate are produced using a coating process. For example, a positive electrode active substance, a conductive agent, a binder, and a solvent are mixed to prepare a paste-like viscous slurry, and the paste-like viscous slurry is evenly and continuously or intermittently applied on a substrate (such as an aluminum foil) to prepare a positive electrode plate. During coating, it is necessary to ensure the thickness consistency of all coating positions and control the coating thickness in a tolerance range required by the process.

The coating die used in the coating process is provided with a feeding inlet, a discharging outlet, and a channel communicating the feeding inlet and the discharging outlet. External slurry enters the channel through the feeding inlet with certain pressure and flows from the discharging outlet to be applied on the substrate passing by the discharging outlet. However, because the slurry itself flows, when the coating die is relatively wide, the slurry is discharged unevenly, leading to distribution thickness inconsistency of the slurry on the substrate. However, during use of a battery cell, distribution thickness of a positive electrode active substance layer on a positive electrode current collector and distribution thickness of a negative electrode active substance layer on a negative electrode current collector directly affect safety, capacity, service life, and other performance aspects of the battery cell. Therefore, the coating thickness of the slurry applied on the substrate needs to be controlled within a specified tolerance range, so as to improve various performance aspects of the battery cell.

The inventor has found through research that the slurry flows freely after entering the coating die through the feeding inlet. Pressure of the slurry close to the feeding inlet is relatively high, while the pressure of the slurry away from the feeding inlet is relatively low. This leads to non-uniform pressure of the slurry during flowing, easily causes pressure concentration, and makes the consistency of the coating thickness be unable to meet the expected requirements. In view of this, the inventor provides a branching channel between the discharging outlet and the feeding inlet. The branching channel can disperse the slurry in the coating die, allowing for pressure uniformity of the slurry and improving the consistency of the coating thickness.

When the coating requirement changes, requirement of pressure consistency of the slurry also changes. However, because the branching channel is usually provided in the coating die and is difficult to be adjusted directly, the entire coating die needs to be replaced, causing high coating costs and low coating efficiency.

In view of this, an embodiment of this application provides a coating die, where a branching channel is provided on a detachable rectifying mechanism. When the coating requirement changes, only the rectifying mechanism needs to be replaced, lowering coating coats and improving coating efficiency.

The coating die provided in this embodiment of this application can be used for but not limited to electrode plate production, and can also be used for production of other workpieces requiring a coating process.

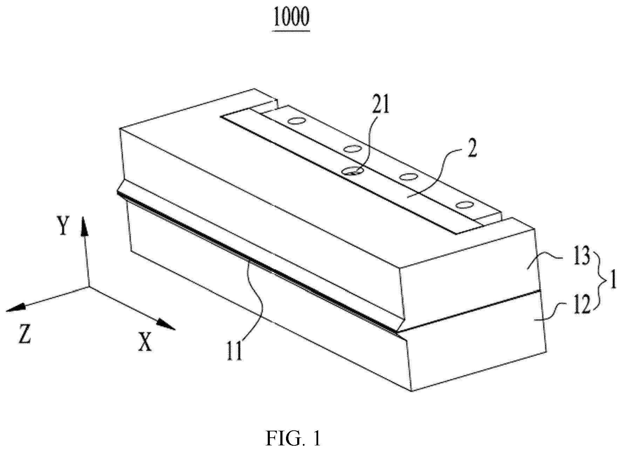

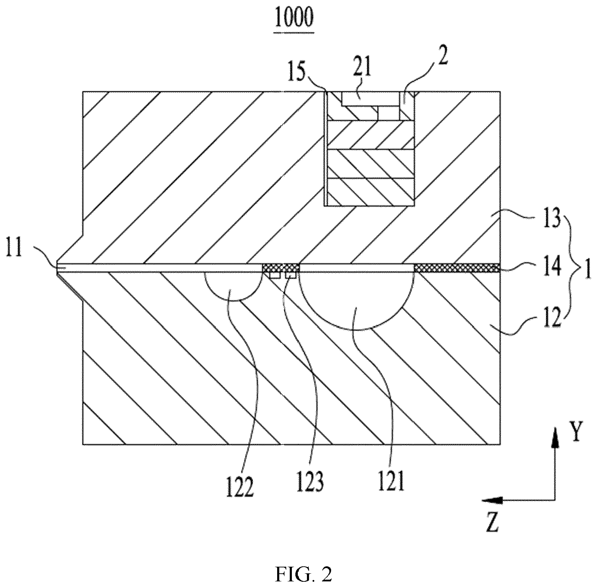

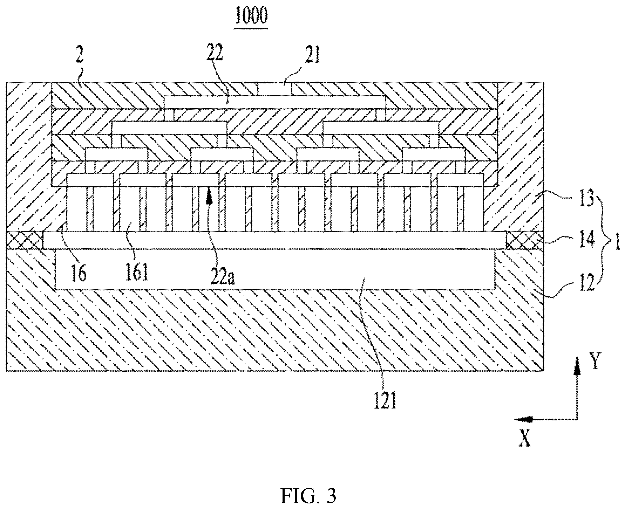

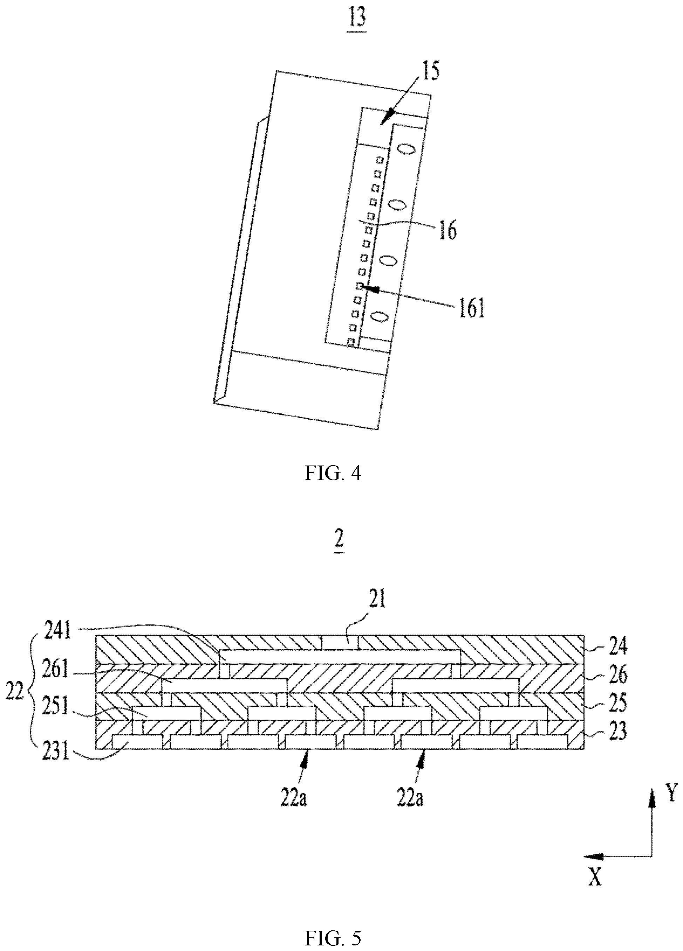

FIG. 1 is a schematic structural diagram of a coating die according to some embodiments of this application; FIG. 2 is a schematic cross-sectional view of the coating die shown in FIG. 1; FIG. 3 is another schematic cross-sectional view of the coating die shown in FIG. 1; FIG. 4 is a schematic structural diagram of a second die shown in FIG. 1; and FIG. 5 is a schematic cross-sectional view of a rectifying mechanism shown in FIG. 1.

As shown in FIG. 1 to FIG. 5, a coating die 1000 according to an embodiment of this application is configured to apply a slurry on a substrate. The coating die 1000 includes a die body 1 and a rectifying mechanism 2. The die body 1 is provided with a discharging outlet 11. The rectifying mechanism 2 is provided with a feeding inlet 21 and a branching channel 22, where the feeding inlet 21 is configured for injecting the slurry, the branching channel 22 communicates with the feeding inlet 21 and is provided with multiple branching openings 22a, and the rectifying mechanism 2 is exposed to the outside of the die body 1 and is detachably connected to the die body 1, so that the multiple branching openings 22a communicate with the discharging outlet 11.

The substrate may be a stripe-shaped structure and passes by the discharging outlet 11 of the coating die 1000. The slurry passes sequentially through the feeding inlet 21, the branching channel 22, and the discharging outlet 11 under pressure and is sprayed onto surface of the substrate. The slurry applied on the surface of the substrate forms a coating.

For example, the substrate is a metallic foil. The slurry includes an active substance, a binder, a conductive agent, and a solvent. Optionally, the active substance is a positive electrode active substance or a negative electrode active substance.

The feeding inlet 21 is connected to an external feeding device. The feeding device injects the slurry into the feeding inlet 21 with some pressure. The feeding inlet 21 may be one or multiple. This is not limited in the embodiments.

The discharging outlet 11 is a slurry outlet and is used for controlling width and thickness of a coating layer formed through coating.

In this embodiment, one or more branching channels 22 may be provided.

In this embodiment, communication may be direct communication or indirect communication through another communicating structure. For example, the branching channel 22 may directly communicate with the feeding inlet 21 or may indirectly communicate with the feeding inlet 21 through another communicating structure.

The rectifying mechanism 2 may be connected to the die body 1 via snap-fitting, fastener connection, or other detachable connection manners. The rectifying mechanism 2 is exposed to the outside of the die body 1, and the rectifying mechanism 2 can be detached from and mounted on the die body 1 externally.

In this embodiment, after the slurry enters the branching channel 22 through the feeding inlet 21, the multiple branching openings 22a can branch the slurry to reduce a pressure difference of the slurry flowing from the branching openings 22a, improve pressure uniformity of the slurry, and improve the consistency of the coating thickness. The coating die 1000 may be provided with multiple rectifying mechanisms 2, and the multiple rectifying mechanisms 2 may be provided with branching channels 22 having different specifications. When the coating requirement changes, the rectifying mechanism 2 can be replaced directly, without adjusting other structures of the coating die 1000, which can improve the adaptability of the coating die 1000. When the rectifying mechanism 2 is being replaced, the rectifying mechanism 2 can be detached from and mounted on the die body 1 externally, so as to improve replacement efficiency and coating efficiency of the rectifying mechanism 2.

In some embodiments, the multiple branching openings 22a are arranged at equal internals along a first direction X.

In these embodiments, the multiple branching openings 22a are arranged with equal gaps along the first direction X, so that the slurry flowing from the multiple branching openings 22a can evenly flow to the discharging outlet 11, reducing pressure difference of the discharging outlet 11 along the first direction X and improving the consistency of the coating thickness.

In some embodiments, the die body 1 includes a first die 12, a second die 13, and a gasket 14. The first die 12 and the second die 13 are disposed opposite each other along a second direction Y, and the gasket 14 is disposed between the first die 12 and the second die 13, so as to form the discharging outlet 11 between the first die 12 and the second die 13. The first die 12 is provided with a first converging cavity 121, and the first converging cavity 121 is recessed on surface of the first die 12 facing the second die 13. The first converging cavity 121 is configured to communicate the multiple branching openings 22a with the discharging outlet 11. The rectifying mechanism 2 is mounted on the second die 13.

The first die 12 is connected to the second die 13. For example, the first die 12 and the second die 13 can be connected via fastener connection, snap-fitting, or other manners.

The gasket 14 is used for separating the first die 12 from the second die 13, so as to form a gap between the first die 12 and the second die 13, and the gap can be used as the discharging outlet 11.

In these embodiments of this application, the first converging cavity 121 can converge slurry flowing from the multiple branching openings 22a, functioning as buffering and uniforming pressure, so that the slurry evenly flows from the discharging outlet 11, improving the consistency of the coating thickness.

In some embodiments, the first die 12 is under the second die 13. In this case, the first die 12 may alternatively be referred to as a lower die, and the second die 13 may be referred to as an upper die.

In some embodiments, the first direction X is perpendicular to the second direction Y.

In some embodiments, the multiple branching openings 22a and the first converging cavity 121 are disposed opposite each other along the second direction Y. The slurry flowing from the branching opening 22a may directly flow into the first converging cavity 121 along the second direction Y, so as to reduce resistance to the slurry during flowing.

In some embodiments, the die body 1 is provided with a mounting hole 15, and the rectifying mechanism 2 is at least partially accommodated in the mounting hole 15 and connected to the die body 1.

The mounting hole 15 may be a through hole or a blind hole.

In these embodiments, the mounting hole 15 can position the rectifying mechanism 2 during mounting of the rectifying mechanism 2, so as to improve replacement efficiency of the rectifying mechanism 2. The mounting hole 15 can further accommodate at least a portion of the rectifying mechanism 2, so as to reduce the volume of the coating die 1000 and save space.

In some embodiments, the mounting hole 15 is provided on the second die 13.

In some embodiments, the die body 1 is provided with a support wall 16, and the support wall 16 is located at the bottom of the mounting hole 15 and used for supporting the rectifying mechanism 2. The support wall 16 is provided with multiple first through holes 161, and each branching opening 22a communicates with the discharging outlet 11 through at least two first through holes 161.

In these embodiments, the support wall 16 can support the rectifying mechanism 2, so as to limit the rectifying mechanism 2 when the rectifying mechanism 2 is inserted into the mounting hole 15, reducing risk of the rectifying mechanism 2 being excessively inserted into the die body 1 and improving mounting and detachment efficiency of the rectifying mechanism 2. The multiple first through holes 161 can branch the slurry, so as to improve pressure uniformity of the slurry and improve the consistency of the coating thickness.

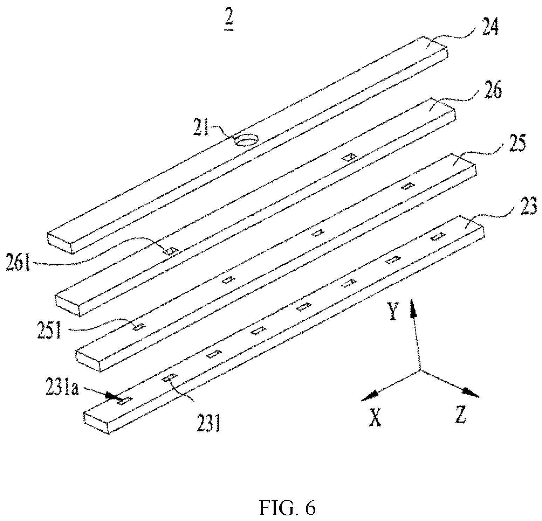

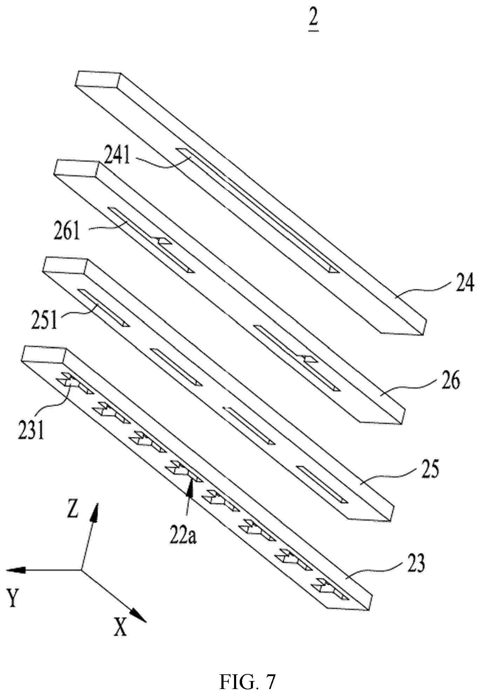

FIG. 6 is a schematic exploded view of a rectifying mechanism according to some embodiments of this application; and FIG. 7 is another schematic exploded view of a rectifying mechanism according to some embodiments of this application.

With reference to FIG. 5 to FIG. 7, in some embodiments, the rectifying mechanism 2 includes a first plate 23 and a second plate 24 that are stacked, where the first plate 23 includes multiple first flow channels 231 spaced apart, each first flow channel 231 forming the branching opening 22a on surface of the first plate 23 facing away from the second plate 24. The second plate 24 is provided with a second flow channel 241 and a feeding inlet 21, the second flow channel 241 being configured to communicate the feeding inlet 21 with the multiple first flow channels 231. The branching channel 22 includes the multiple first flow channels 231 and the second flow channel 241.

The first plate 23 and the second plate 24 can be stacked and disposed adjacent to each other. Certainly, the first plate 23 and the second plate 24 may have another structure stacked therebetween.

In these embodiments, after the slurry enters the second flow channel 241 through the feeding inlet 21, the multiple first flow channels 231 can branch the slurry in the second flow channel 241, so as to reduce a pressure difference of the slurry flowing from the branching openings 22a, improve pressure uniformity of the slurry, and improve the consistency of the coating thickness. The first plate 23 needs to be provided with only the first flow channel 231 and the second plate 24 needs to be provided with only the second flow channel 241 and the feeding inlet 21, which can lower forming difficulties of the first plate 23 and the second plate 24. The first plate 23 and the second plate 24 being stacked can achieve communication between the first flow channel 231 and the second flow channel 241, so as to simplify a forming process of the rectifying mechanism 2.

In some embodiments, the first flow channel 231 forms a first opening 231a on surface of the first plate 23 facing the second plate 24, the first opening 231a being configured to communicate with the second flow channel 241.

In these embodiments, the first flow channel 231 forms a first opening 231a on an end facing the second plate 24, which can shorten a distance between the second flow channel 241 and the first flow channel 231, shortening a flowing path of the slurry.

In some embodiments, the first plate 23 is detachably connected to the second plate 24. For example, the second plate 24 is connected to the first plate 23 via snap-fitting, fastener connection, or other manners.

In these embodiments, when the coating requirement changes, the first plate 23 of the rectifying mechanism 2 can be replaced, so as to improve the adaptability of the rectifying mechanism 2.

For example, the rectifying mechanism 2 can be provided with multiple first plates 23, and the multiple first plates 23 can be provided with first flow channels 231 having different specifications (for example, a quantity of the first flow channels 231 on the multiple first plates 23 is different). When the coating requirement changes, only the first plate 23 of the rectifying mechanism 2 needs to be replaced, without replacing the entire rectifying mechanism 2.

In some embodiments, the rectifying mechanism 2 further includes a third plate 25 provided between the first plate 23 and the second plate 24. The third plate 25 is provided with multiple third flow channels 251 spaced apart, each third flow channel 251 communicating at least two first flow channels 231 with the second flow channel 241. The branching channel 22 includes the multiple third flow channels 251.

In these embodiments, the third flow channel 251 of the third plate 25 can perform primary branching on the slurry in the second flow channel 241, and the first flow channel 231 performs secondary branching on the slurry in the third flow channel 251. The branching channel 22 can perform multi-level branching on the slurry, so as to achieve uniform flow and uniform pressure.

In some embodiments, the rectifying mechanism 2 further includes a fourth plate 26 provided between the third plate 25 and the second plate 24. The fourth plate 26 is provided with multiple fourth flow channels 261 spaced apart, each fourth flow channel 261 communicating at least two third flow channels 251 with the second flow channel 241. The branching channel 22 includes the multiple fourth flow channels 261.

In these embodiments, the fourth flow channel 261 performs primary branching on the slurry in the second flow channel 241, the third flow channel 251 performs secondary branching on the slurry in the fourth flow channel 261, and the first flow channel 231 performs third-level branching on the slurry in the third flow channel 251. The branching channel 22 can perform multi-level branching on the slurry, so as to achieve uniform flow and uniform pressure.

In some embodiments, the second plate 24, the fourth plate 26, the third plate 25, and the first plate 23 are stacked and connected in sequence.

In some embodiments, adjacent plates in the rectifying mechanism 2 are adhered.

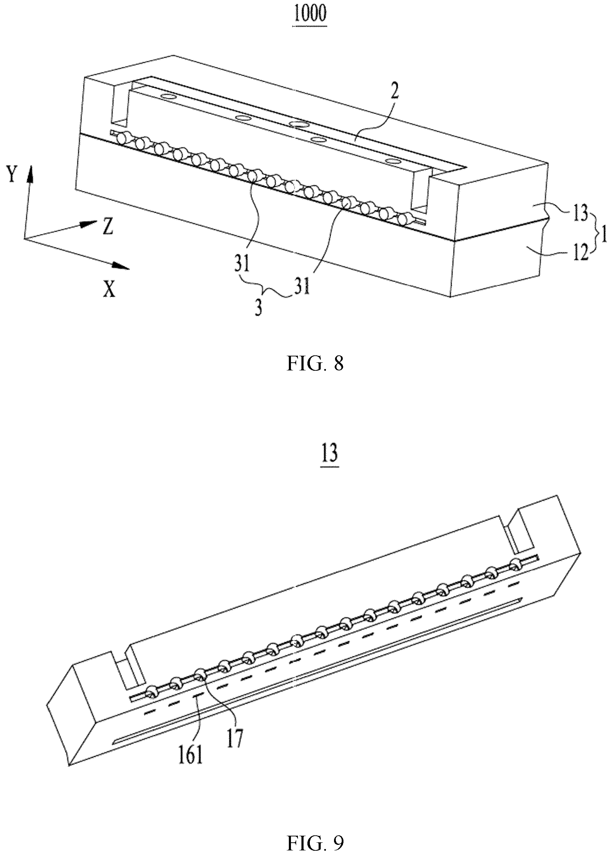

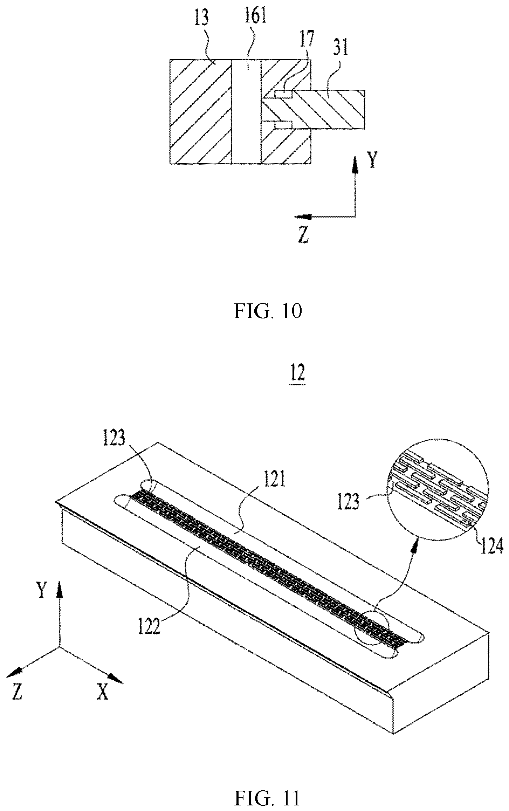

FIG. 8 is a schematic structural diagram of a coating die according to some embodiments of this application; FIG. 9 is a schematic structural diagram of a second die shown in FIG. 8; and FIG. 10 is a partial schematic cross-sectional view of the coating die shown in FIG. 8.

As shown in FIG. 8 to FIG. 10, in some embodiments, the coating die 1000 further includes a regulating mechanism 3 configured to block the first through hole 161. The regulating mechanism 3 is movably connected to the die body 1 to regulate an area of the first through hole 161 blocked by the regulating mechanism 3.

The regulating mechanism 3 can be used for blocking some of the first through holes 161 or all the first through holes 161.

In these embodiments, the regulating mechanism 3 can adjust a flow area of the first through hole 161 by blocking the first through hole 161, thereby achieving flow control and pressure control of the slurry flowing through the first through hole 161, improving the consistency of the coating thickness.

In some embodiments, the regulating mechanism 3 includes multiple regulating members 31, the multiple regulating members 31 being disposed corresponding to the multiple first through holes 161.

In these embodiments, each regulating member 31 can regulate the flow area of the corresponding first through hole 161. When a deviation is detected in the thickness of the slurry applied at the discharging outlet 11, the deviation can be fed back such that the regulating member 31 is controlled to regulate the flow and pressure of the slurry, improving the consistency of the coating thickness.

In some embodiments, the die body 1 is provided with a second through hole 17 communicating with the first through hole 161, and the regulating member 31 extends into the first through hole 161 via the second through hole 17.

In these embodiments, the size of a portion of the regulating member 31 extending into the first through hole 161 can adjust the flow area of the first through hole 161, thereby achieving flow control and pressure control of the slurry flowing through the first through hole 161, improving the consistency of the coating thickness.

FIG. 11 is a schematic structural diagram of a first die shown in FIG. 8.

As shown in FIG. 11, the first die 12 further includes a second converging cavity 122 and a turbulent flow channel 123, where the second converging cavity 122 is provided between the first converging cavity 121 and the discharging outlet 11 and communicates with the discharging outlet 11, the turbulent flow channel 123 communicates with the first converging cavity 121 and the second converging cavity 122, and the turbulent flow channel 123 is used for dispersing the slurry passing through the turbulent flow channel 123.

In this embodiment, the turbulent flow channel 123 may disrupt the slurry flowing from the first converging cavity 121 so that the slurry is dispersed and the uniform pressure of the slurry is achieved. The second converging cavity 122 can converge slurry flowing through the turbulent flow channel 123, functioning as buffering and uniforming pressure, so that the slurry evenly flows from the discharging outlet 11, improving the consistency of the coating thickness.

The first converging cavity 121 and the second converging cavity 122 are arranged along a third direction Z. For example, the third direction Z is perpendicular to the first direction X and the second direction Y.

The first die 12 includes multiple blockers 124 staggered with each other, and the turbulent flow channel 123 includes a gap formed between the multiple blockers 124. The blocker 124 can change a flowing direction of the slurry, so as to achieve turbulent flow of the slurry.

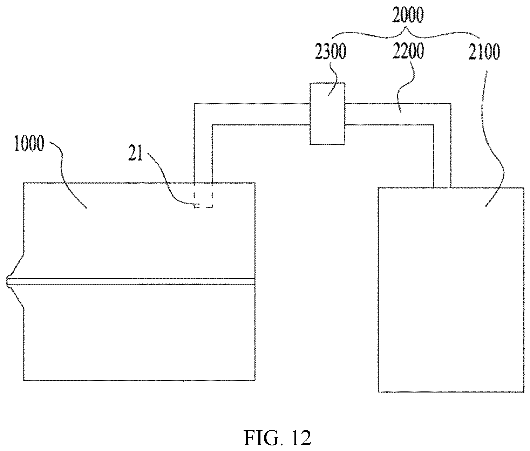

FIG. 12 is a schematic structural diagram of a battery electrode plate coating apparatus according to some embodiments of this application.

As shown in FIG. 12, an embodiment of this application further provides a battery electrode plate coating apparatus, where the coating apparatus includes the coating die 1000 according to any of the foregoing embodiments. The coating apparatus in this embodiment of this application can improve the thickness consistency of electrode plates and improve the coating efficiency.

In some embodiments, the coating apparatus further includes a feeding device 2000, where the feeding device 2000 is connected to the feeding inlet 21 of the coating die 1000 and is configured to supply slurry.

In some embodiments, the feeding device 2000 includes a slurry tank 2100, a pipe 2200, and a suction pump 2300. The slurry tank 2100 is configured to store the slurry, the pipe 2200 is configured to connect the slurry tank 2100 and feeding inlet 21, and the suction pump 2300 is disposed at the pipe 2200. The suction pump 2300 is configured to transfer the slurry in the slurry tank 2100 to the feeding inlet 21 of the coating die 1000 through the pipe 2200.

Referring to FIG. 1 to FIG. 5, an embodiment of this application provides a coating die 1000, where the coating die 1000 includes a die body 1 and a rectifying mechanism 2. The die body 1 includes a first die 12, a second die 13, and a gasket 14. The first die 12 and the second die 13 are disposed opposite each other along a second direction Y, and the gasket 14 is disposed between the first die 12 and the second die 13 to form a discharging outlet 11 between the first die 12 and the second die 13. The first die 12 is provided with a first converging cavity 121, and the first converging cavity 121 is recessed on surface of the first die 12 facing the second die 13.

The second die 13 is provided with a mounting hole 15, and the rectifying mechanism 2 is at least partially accommodated in the mounting hole 15 and connected to the second die 13. The rectifying mechanism 2 is exposed to the outside of the second die 13 and is detachably connected to the second die 13.

The rectifying mechanism 2 includes a second plate 24, a fourth plate 26, a third plate 25, and a first plate 23 stacked in sequence, where the first plate 23 includes eight first flow channels 231 spaced apart, each first flow channel 231 forming a branching opening 22a on surface of the first plate 23 facing away from the second plate 24. The second plate 24 is provided with a second flow channel 241 and a feeding inlet 21, the feeding inlet 21 being configured to inject the slurry and communicate with the second flow channel 241. The third plate 25 is provided with four third flow channels 251 spaced apart, and the fourth plate 26 is provided with two fourth flow channels 261 apart from each other. Each fourth flow channel 261 communicates two third flow channels 251 with the second flow channel 241, and each third flow channel 251 communicates two first flow channels 231 with the fourth flow channel 261. The first converging cavity 121 communicates branching openings 22a of the eight first flow channels 231 with the discharging outlet 11.

## Claims

1. A coating die (1000), configured to apply a slurry on a substrate, wherein the coating die (1000) comprises:
a die body (1), provided with a discharging outlet (11); and
a rectifying mechanism (2), provided with a feeding inlet (21) and a branching channel (22), wherein the feeding inlet (21) is configured for injecting the slurry, the branching channel (22) communicates with the feeding inlet (21) and is provided with multiple branching openings (22a), and the rectifying mechanism (2) is exposed to the outside of the die body (1) and is detachably connected to the die body (1), so that the multiple branching openings (22a) communicate with the discharging outlet (11),
wherein the die body (1) is provided with a mounting hole (15), and the rectifying mechanism (2) is at least partially accommodated inside the mounting hole (15) and connected to the die body (1) and wherein the die body (1) is provided with a support wall (16), the support wall (16) being located at the bottom of the mounting hole (15) and used for supporting the rectifying mechanism (2); and
the support wall (16) is provided with multiple first through holes (161), and each of the branching openings (22a) communicates with the discharging outlet (11) through at least two of the first through holes (161),
wherein the coating die (1000) further comprises a regulating mechanism (3) configured to block a first through hole (161), wherein the regulating mechanism (3) is movably connected to the die body (1) to regulate an area of the first through hole (161) blocked by the regulating mechanism (3).

2. The coating die (1000) according to claim 1, wherein the regulating mechanism (3) comprises multiple regulating members (31), the multiple regulating members (31) being disposed corresponding to the multiple first through holes (161).

3. The coating die (1000) according to claim 2, wherein the die body (1) is provided with a second through hole (17) communicating with the first through hole (161), and the regulating member (31) extends into the first through hole (161) via the second through hole (17).

4. The coating die (1000) according to any one of claims 1 to 3, wherein the rectifying mechanism (2) comprises a first plate (23) and a second plate (24) that are stacked, wherein the first plate (23) comprises multiple first flow channels (231) spaced apart, each first flow channel (231) forming the branching opening (22a) on surface of the first plate (23) facing away from the second plate (24);
the second plate (24) is provided with a second flow channel (241) and the feeding inlet (21), the second flow channel (241) being configured to communicate the feeding inlet (21) with the multiple first flow channels (231); and
the branching channel (22) comprises the multiple first flow channels (231) and the second flow channel (241).

5. The coating die (1000) according to claim 4, wherein the first flow channel (231) forms a first opening (231a) on surface of the first plate (23) facing the second plate (24), the first opening (231a) being configured to communicate with the second flow channel (241).

6. The coating die (1000) according to claim 4 or 5, wherein the first plate (23) and the second plate (24) are detachably connected.

7. The coating die (1000) according to any one of claims 4 to 6, wherein the rectifying mechanism (2) further comprises a third plate (25) provided between the first plate (23) and the second plate (24), wherein the third plate (25) is provided with multiple third flow channels (251) spaced apart, each of the third flow channels (251) communicating at least two of the first flow channels (231) with the second flow channel (241); and
the branching channel (22) comprises the multiple third flow channels (251).

8. The coating die (1000) according to claim 7, wherein the rectifying mechanism (2) further comprises a fourth plate (26) provided between the third plate (25) and the second plate (24), wherein the fourth plate (26) is provided with multiple fourth flow channels (261) spaced apart, each of the fourth flow channels (261) communicating at least two of the third flow channels (251) with the second flow channel (241); and the branching channel (22) comprises the multiple fourth flow channels (261).

9. The coating die (1000) according to any one of claims 1 to 8, wherein the multiple branching openings (22a) are arranged with equal gaps along a first direction (X).

10. The coating die (1000) according to any one of claims 1 to 9, wherein the die body (1) comprises a first die (12), a second die (13), and a gasket (14), wherein the first die (12) and the second die (13) are arranged opposite each other along a second direction (Y), and the gasket (14) is provided between the first die (12) and the second die (13) to form the discharging outlet (11) between the first die (12) and the second die (13);
the first die (12) is provided with a first converging cavity (121), wherein the first converging cavity (121) is recessed on surface of the first die (12) facing the second die (13), and the first converging cavity (121) is configured to communicate the multiple branching openings (22a) with the discharging outlet (11); and
the rectifying mechanism (2) is mounted on the second die (13).

11. The coating die (1000) according to claim 10, wherein the multiple branching openings (22a) are arranged opposite the first converging cavity (121) along the second direction (Y).

12. A battery electrode plate coating apparatus, comprising the coating die (1000) according to any one of claims 1 to 11.

## Patentansprüche

1. Beschichtungsdüse (1000), die zum Auftragen einer Schlämme auf ein Substrat eingerichtet ist, wobei die Beschichtungsdüse (1000) Folgendes umfasst:
einen Düsenkörper (1), der mit einem Abgabeauslass (11) versehen ist; und
einen Richtungsregelungsmechanismus (2), der mit einem Speiseeinlass (21) und einem Verzweigungskanal (22) versehen ist, wobei der Speiseeinlass (21) zum Injizieren der Schlämme eingerichtet ist, der Verzweigungskanal (22) mit dem Speiseeinlass (21) in Verbindung steht und
mit mehreren Verzweigungsöffnungen (22a) versehen ist und der Richtungsregelungsmechanismus (2) an der Außenseite des Düsenkörpers (1) frei liegt und lösbar mit dem Düsenkörper (1) verbunden ist, so dass die mehreren Verzweigungsöffnungen (22a) mit dem Abgabeauslass (11) verbunden sind,
wobei der Düsenkörper (1) mit einer Montagebohrung (15) versehen ist und der Richtungsregelungsmechanismus (2) mindestens teilweise innerhalb der Montagebohrung (15) untergebracht ist und mit dem Düsenkörper (1) verbunden ist und wobei der Düsenkörper (1) mit einer Stützwand (16) versehen ist, wobei die Stützwand (16) am Boden der Montagebohrung (15) angeordnet ist und zum Stützen des Richtungsregelungsmechanismus (2) verwendet wird; und
die Stützwand (16) mit mehreren ersten Durchgangslöchern (161) versehen ist und jede der Verzweigungsöffnungen (22a) durch mindestens zwei der ersten Durchgangslöcher (161) mit dem Abgabeauslass (11) verbunden ist,
wobei die Beschichtungsdüse (1000) weiterhin einen Regelungsmechanismus (3) umfasst, der eingerichtet ist, um ein erstes Durchgangsloch (161) zu blockieren, wobei der Regelungsmechanismus (3) beweglich mit dem Düsenkörper (1) verbunden ist, um eine Fläche des ersten Durchgangslochs (161) zu regeln, das durch den Regelungsmechanismus (3) blockiert wird.

2. Beschichtungsdüse (1000) nach Anspruch 1, wobei der Regelungsmechanismus (3) mehrere Regelungselemente (31) umfasst, wobei die mehreren Regelungselemente (31) den mehreren ersten Durchgangslöchern (161) entsprechend angeordnet sind.

3. Beschichtungsdüse (1000) nach Anspruch 2, wobei der Düsenkörper (1) mit einem zweiten Durchgangsloch (17) versehen ist, das mit dem ersten Durchgangsloch (161) verbunden ist, und das Regelungselement (31) sich über das zweite Durchgangsloch (17) in das erste Durchgangsloch (161) erstreckt.

4. Beschichtungsdüse (1000) nach einem der Ansprüche 1 bis 3, wobei der Richtungsregelungsmechanismus (2) eine erste Platte (23) und eine zweite Platte (24) umfasst, die übereinander angeordnet sind, wobei die erste Platte (23) mehrere erste Strömungskanäle (231) umfasst, die voneinander beabstandet sind, wobei jeder erste Strömungskanal (231) die Verzweigungsöffnung (22a) auf einer Oberfläche der ersten Platte (23) ausbildet, die von der zweiten Platte (24) abgewandt ist;
die zweite Platte (24) mit einem zweiten Strömungskanal (241) und dem Speiseeinlass (21) versehen ist, wobei der zweite Strömungskanal (241) eingerichtet ist, um den Speiseeinlass (21) mit den mehreren ersten Strömungskanälen (231) zu verbinden; und
der Verzweigungskanal (22) die mehreren ersten Strömungskanäle (231) und den zweiten Strömungskanal (241) umfasst.

5. Beschichtungsdüse (1000) nach Anspruch 4, wobei der erste Strömungskanal (231) eine erste Öffnung (231a) auf einer Oberfläche der ersten Platte (23) ausbildet, die der zweiten Platte (24) zugewandt ist, wobei die erste Öffnung (231a) eingerichtet ist, um mit dem zweiten Strömungskanal (241) verbunden zu sein.

6. Beschichtungsdüse (1000) nach Anspruch 4 oder 5, wobei die erste Platte (23) und die zweite Platte (24) lösbar verbunden sind.

7. Beschichtungsdüse (1000) nach einem der Ansprüche 4 bis 6, wobei der Richtungsregelungsmechanismus (2) weiterhin eine dritte Platte (25) umfasst, die zwischen der ersten Platte (23) und der zweiten Platte (24) bereitgestellt ist, wobei die dritte Platte (25) mit mehreren dritten Strömungskanälen (251) versehen ist, die voneinander beabstandet sind, wobei jeder der dritten Strömungskanäle (251) mindestens zwei der ersten Strömungskanäle (231) mit dem zweiten Strömungskanal (241) verbindet; und
der Verzweigungskanal (22) die mehreren dritten Strömungskanäle (251) umfasst.

8. Beschichtungsdüse (1000) nach Anspruch 7, wobei der Richtungsregelungsmechanismus (2) weiterhin eine vierte Platte (26) umfasst, die zwischen der dritten Platte (25) und der zweiten Platte (24) bereitgestellt ist, wobei die vierte Platte (26) mit mehreren vierten Strömungskanälen (261) versehen ist, die voneinander beabstandet sind, wobei jeder der vierten Strömungskanäle (261) mindestens zwei der dritten Strömungskanäle (251) mit dem zweiten Strömungskanal (241) verbindet; und
der Verzweigungskanal (22) die mehreren vierten Strömungskanäle (261) umfasst.

9. Beschichtungsdüse (1000) nach einem der Ansprüche 1 bis 8, wobei die mehreren Verzweigungsöffnungen (22a) entlang einer ersten Richtung (X) mit gleichen Zwischenräumen angeordnet sind.

10. Beschichtungsdüse (1000) nach einem der Ansprüche 1 bis 9, wobei der Düsenkörper (1) eine erste Düse (12), eine zweite Düse (13) und eine Dichtung (14) umfasst, wobei die erste Düse (12) und die zweite Düse (13) entlang einer zweiten Richtung (Y) einander gegenüberliegend angeordnet sind und die Dichtung (14) zwischen der ersten Düse (12) und der zweiten Düse (13) bereitgestellt ist, um den Abgabeauslass (11) zwischen der ersten Düse (12) und der zweiten Düse (13) auszubilden;
die erste Düse (12) mit einem ersten konvergierenden Hohlraum (121) versehen ist, wobei der erste konvergierende Hohlraum (121) auf einer Oberfläche der ersten Düse (12) vertieft ist, die der zweiten Düse (13) zugewandt ist, und der erste konvergierende Hohlraum (121) eingerichtet ist, um die mehreren Verzweigungsöffnungen (22a) mit dem Abgabeauslass (11) zu verbinden; und der Richtungsregelungsmechanismus (2) auf der zweiten Düse (13) befestigt ist.

11. Beschichtungsdüse (1000) nach Anspruch 10, wobei die mehreren Verzweigungsöffnungen (22a) entlang der zweiten Richtung (Y) dem ersten konvergierenden Hohlraum (121) gegenüberliegend angeordnet sind.

12. Beschichtungsvorrichtung für Batterieelektrodenplatten, die Beschichtungsdüse (1000) nach einem der Ansprüche 1 bis 11 umfassend.

## Revendications

1. Matrice de revêtement (1000), configurée pour appliquer une suspension sur un substrat, la matrice de revêtement (1000) comprenant :
un corps de matrice (1), pourvu d'une sortie de décharge (11) ; et
un mécanisme de rectification (2), pourvu d'une entrée d'alimentation (21) et d'un canal de ramification (22), l'entrée d'alimentation (21) étant configurée pour injecter la suspension, le canal de ramification (22) communiquant avec l'entrée d'alimentation (21) et étant pourvu de multiples ouvertures de ramification (22a), et le mécanisme de rectification (2) étant exposé à l'extérieur du corps de matrice (1) et étant relié de manière détachable au corps de matrice (1), de sorte que les multiples ouvertures de ramification (22a) communiquent avec la sortie de décharge (11),
dans laquelle le corps de matrice (1) est pourvu d'un trou de montage (15), et le mécanisme de rectification (2) est au moins partiellement logé à l'intérieur du trou de montage (15) et relié au corps de matrice (1) et le corps de matrice (1) étant pourvu d'une paroi de support (16), la paroi de support (16) étant située au fond du trou de montage (15) et utilisée pour supporter le mécanisme de rectification (2) ; et
la paroi de support (16) est pourvue de multiples premiers trous traversants (161), et chacune des ouvertures de ramification (22a) communique avec la sortie de décharge (11) à travers au moins deux des premiers trous traversants (161),
dans laquelle la matrice de revêtement (1000) comprend en outre un mécanisme de régulation (3) configuré pour bloquer un premier trou traversant (161), le mécanisme de régulation (3) étant relié de façon mobile au corps de matrice (1) pour réguler une zone du premier trou traversant (161) bloquée par le mécanisme de régulation (3).

2. Matrice de revêtement (1000) selon la revendication 1, dans laquelle le mécanisme de régulation (3) comprend de multiples éléments de régulation (31), les multiples éléments de régulation (31) étant disposés en correspondance avec les multiples premiers trous traversants (161).

3. Matrice de revêtement (1000) selon la revendication 2, dans laquelle le corps de matrice (1) est pourvu d'un deuxième trou traversant (17) communiquant avec le premier trou traversant (161), et l'élément de régulation (31) s'étend jusque dans le premier trou traversant (161) par l'intermédiaire du deuxième trou traversant (17).

4. Matrice de revêtement (1000) selon l'une quelconque des revendications 1 à 3, dans laquelle le mécanisme de rectification (2) comprend une première plaque (23) et une deuxième plaque (24) qui sont empilées, la première plaque (23) comprenant de multiples premiers canaux d'écoulement (231) espacés, chaque premier canal d'écoulement (231) formant l'ouverture de ramification (22a) en surface de la première plaque (23) faisant face à l'écart de la deuxième plaque (24) ;
la deuxième plaque (24) est pourvue d'un deuxième canal d'écoulement (241) et de l'entrée d'alimentation (21), le deuxième canal d'écoulement (241) étant configuré pour faire communiquer l'entrée d'alimentation (21) avec les multiples premiers canaux d'écoulement (231) ; et
le canal de ramification (22) comprend les multiples premiers canaux d'écoulement (231) et le deuxième canal d'écoulement (241).

5. Matrice de revêtement (1000) selon la revendication 4, dans laquelle le premier canal d'écoulement (231) forme une première ouverture (231a) en surface de la première plaque (23) faisant face à la deuxième plaque (24), la première ouverture (231a) étant configurée pour communiquer avec le deuxième canal d'écoulement (241).

6. Matrice de revêtement (1000) selon la revendication 4 ou la revendication 5, dans laquelle la première plaque (23) et la deuxième plaque (24) sont reliées de manière détachable.

7. Matrice de revêtement (1000) selon l'une quelconque des revendications 4 à 6, dans laquelle le mécanisme de rectification (2) comprend en outre une troisième plaque (25) prévue entre la première plaque (23) et la deuxième plaque (24), la troisième plaque (25) étant pourvue de multiples troisièmes canaux d'écoulement (251) espacés, chacun des troisièmes canaux d'écoulement (251) faisant communiquer au moins deux des premiers canaux d'écoulement (231) avec le deuxième canal d'écoulement (241) ; et
le canal de ramification (22) comprend les multiples troisièmes canaux d'écoulement (251).

8. Matrice de revêtement (1000) selon la revendication 7, dans laquelle le mécanisme de rectification (2) comprend en outre une quatrième plaque (26) prévue entre la troisième plaque (25) et la deuxième plaque (24), la quatrième plaque (26) étant pourvue de multiples quatrièmes canaux d'écoulement (261) espacés, chacun des quatrièmes canaux d'écoulement (261) faisant communiquer au moins deux des troisièmes canaux d'écoulement (251) avec le deuxième canal d'écoulement (241) ; et
le canal de ramification (22) comprend les multiples quatrièmes canaux d'écoulement (261).

9. Matrice de revêtement (1000) selon l'une quelconque des revendications 1 à 8, dans laquelle les multiples ouvertures de ramification (22a) sont agencées avec des écarts égaux le long d'une première direction (X).

10. Matrice de revêtement (1000) selon l'une quelconque des revendications 1 à 9, dans laquelle le corps de matrice (1) comprend une première matrice (12), une deuxième matrice (13), et un joint d'étanchéité (14), la première matrice (12) et la deuxième matrice (13) étant agencées à l'opposé l'une de l'autre le long d'une deuxième direction (Y), et le joint d'étanchéité (14) étant prévu entre la première matrice (12) et la deuxième matrice (13) pour former la sortie de décharge (11) entre la première matrice (12) et la deuxième matrice (13) ;
la première matrice (12) est pourvue d'une première cavité convergente (121), la première cavité convergente (121) étant évidée en surface de la première matrice (12) faisant face à la deuxième matrice (13), et la première cavité convergente (121) étant configurée pour faire communiquer les multiples ouvertures de ramification (22a) avec la sortie de décharge (11) ; et
le mécanisme de rectification (2) est monté sur la deuxième matrice (13).

11. Matrice de revêtement (1000) selon la revendication 10, dans laquelle les multiples ouvertures de ramification (22a) sont agencées à l'opposé de la première cavité convergente (121) le long de la deuxième direction (Y).

12. Appareil de revêtement de plaque d'électrode de batterie, comprenant la matrice de revêtement (1000) selon l'une quelconque des revendications 1 à 11.
